(19) Europäisches Patentamt
European Patent Office
Office européen des brevets

(11) **EP 4 445 749 A1**

(12) **EUROPEAN PATENT APPLICATION**
published in accordance with Art. 153(4) EPC

(43) Date of publication:
**16.10.2024 Bulletin 2024/42**

(21) Application number: **22911860.9**

(22) Date of filing: **20.12.2022**

(51) International Patent Classification (IPC):
**A23L 29/00** (2016.01)   **A23L 11/45** (2021.01)
**A23L 11/30** (2016.01)

(52) Cooperative Patent Classification (CPC):
**A23L 11/30; A23L 11/45; A23L 29/00**

(86) International application number:
**PCT/KR2022/020846**

(87) International publication number:
**WO 2023/121227 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2021 KR 20210182887**

(71) Applicant: **CJ CheilJedang Corporation**
**Seoul 04560 (KR)**

(72) Inventors:
• **KIM, Hee Jeung**
**Seoul 04560 (KR)**
• **JEONG, Seoyoon**
**Seoul 04560 (KR)**
• **PARK, Hongwook**
**Seoul 04560 (KR)**
• **KANG, Ki Moon**
**Seoul 04560 (KR)**

(74) Representative: **Icosa**
**83 avenue Denfert-Rochereau**
**75014 Paris (FR)**

(54) **COAGULANT FOR PREPARATION OF BEAN CURD, AND BEAN CURD PREPARED USING SAME**

(57)   The present disclosure relates to a coagulant for producing a bean curd, a bean curd produced using the coagulant, and a method of producing a bean curd using the coagulant.

[FIG. 1]

EP 4 445 749 A1

## Description

### [Technical Field]

The present disclosure relates to a coagulant for producing a bean curd, a bean curd produced using the coagulant, and a method of producing a bean curd using the coagulant.

### [Background Art]

Bean curd has been used as a high-protein food for a long time. According to a bean curd production method traditionally used, bean curds have been produced by dipping and soaking soybeans in water, grinding the soybeans on a millstone and boiling, and then filtering while boiling, and adding magnesium chloride (bittern) as a coagulant to the obtained soymilk at about 60°C to 90°C, which is then stirred and coagulated.

Magnesium chloride is the main ingredient in bittern, which is a by-product after collecting salt from seawater. Unlike calcium sulfate or glucono delta lactone (G.D.L.), magnesium chloride is a fast-acting coagulant that immediately reacts when mixed with soymilk. In general, fast-acting coagulants have an advantage in that they are fast to work and easy to coagulate when producing a bean curd with low water retention, such as a fried bean curd, but have a disadvantage of requiring skilled technology when producing a bean curd with high water retention. For example, in the production of a firm bean curd, when the fast-acting coagulant is stirred with soymilk, if the stirring is not completed within a short period of time, the early solidified part must be crushed again, causing a problem that the bean curd surface becomes not smooth and water drains severely, resulting in hard bean curd. In the case of a silken bean curd, the high concentration of soymilk requires sufficient stirring, and it is quite difficult to coagulate uniformly if only magnesium chloride is used as a coagulant due to its fast reactivity. In addition, when the fast-acting coagulants such as magnesium chloride are used, the quality of soymilk basically greatly affects the difficulty of subsequent coagulation, yield, quality of bean curd, etc.

Accordingly, various studies have been conducted to produce a high-quality bean curd with excellent flavor, elasticity, texture, and yield by using the above-mentioned fast-acting coagulant and slowing down the reaction rate between soymilk protein and coagulant. Initially, a method of slowing down the reaction rate of a fast-acting coagulant by using a combination of the fast-acting coagulant such as magnesium chloride and a slow-acting coagulant such as calcium sulfate, or a method of chemically slowing down the same by using organic acids such as citric acid, etc., and salts thereof has been used. However, the above methods have a problem that it is difficult to produce a delicious bean curd due to the detection of off-flavors and odors such as bitter flavors derived from the slow-acting coagulants such as calcium sulfate, etc.

In another method, the soymilk is cooled to create an environment where coagulation by the coagulant is difficult to occur, and then the fast-acting coagulant is added and mixed, and then the soymilk is gradually heated to solidify while controlling the temperature rise by hot water, steam, or electricity.

However, the above methods have problems in that the methods require excessive production facilities, time, and energy to produce a bean curd with good water retention and flavor using the fast-acting coagulant, and requires considerable skill and technology to control the same.

As a solution to improve the problems, there has been provided a method of emulsifying the fast-acting coagulant such as magnesium chloride using an emulsifier, or a method of using magnesium chloride after being finely powdered and then being dispersed in an edible oil such as corn oil, etc.

However, the method of using the emulsified coagulant as described above has problems in that more oil and emulsifier, which are auxiliary ingredients used to emulsify the fast-acting coagulant, are included than the fast-acting coagulant, and large amounts of oil and emulsifier are used, which is not only a waste of resources, but also requires a separate device to destroy the emulsified layer when added to soymilk. In addition, the high content of oil causes oil odor and deterioration of emulsification during storage, resulting in separation of oil. The emulsified coagulant without the emulsifier has a problem with being easily separated at room temperature.

### [Prior Art Documents]

### [Patent Documents]

(Patent Document 0001) Korean Patent No. 0229010

**[Disclosure]**

**[Technical Problem]**

The present inventors have developed a coagulant for producing a high-quality bean curd with enhanced savory taste, a bean curd produced using the coagulant, and a method of producing a bean curd using the coagulant, thereby completing the present disclosure.

**[Technical Solution]**

An object of the present disclosure is to provide a coagulant for producing a bean curd, the coagulant including 20% by weight to 50% by weight of macadamia nut oil, 1% by weight to 10% by weight of perilla oil, and 15% by weight to 79% by weight of a fast-acting coagulant.

Another object of the present disclosure is to provide a bean curd which is produced using the coagulant for producing a bean curd.

Still another object of the present disclosure is to provide a method of producing a bean curd, the method including the steps of selecting soybeans, soaking and swelling the selected soybeans, producing soymilk by grinding and heating the swollen soybeans and then filtering the same, and coagulating the produced soymilk under stirring while adding the coagulant for producing a bean curd to the produced soymilk.

**[Detailed Description of Preferred Embodiments]**

The present disclosure will be described in detail as follows. Meanwhile, each description and embodiment disclosed in this disclosure may also be applied to other descriptions and embodiments. That is, all combinations of various elements disclosed in this disclosure fall within the scope of the present disclosure. Further, the scope of the present disclosure is not limited by the specific description described below. Additionally, a number of papers and patent documents are referenced and cited throughout this specification. The disclosures of the cited papers and patent documents are incorporated herein by reference in their entirety to further clarify the level and scope of the subject matter to which the present disclosure pertains.

An aspect of the present disclosure provides a coagulant for producing a bean curd, the coagulant including 20% by weight to 50% by weight of macadamia nut oil, 1% by weight to 10% by weight of perilla oil, and 15% by weight to 79% by weight of a fast-acting coagulant.

The coagulant for producing a bean curd of the present disclosure is an emulsified coagulant which is used to coagulate soybean milk in the production of bean curds, and may be usefully applied in producing a high-quality bean curd by dispersing the fast-acting coagulant in macadamia nut oil and perilla oil and coating the same so that the fast-acting coagulant is gradually released during the production of bean curds.

In addition, the coagulant for producing a bean curd of the present disclosure includes the macadamia nut oil and the perilla oil, thereby removing the beany flavor unique to soybeans, preventing the bitter taste, off-flavor, and odor unique to the coagulant for producing a bean curd, and enhancing the original savory flavor of bean curd.

Specifically, the coagulant for producing a bean curd of the present disclosure may include 20% by weight to 50% by weight, specifically, 30% by weight to 50% by weight, and more specifically, 35% by weight to 45% by weight of macadamia nut oil, but is not limited thereto.

When the macadamia nut oil is included in an amount of less than 20% by weight, the unique beany flavor of beans may not be removed and the effect of increasing the savory taste of bean curd is not sufficient. When the macadamia nut oil is included in an amount of more than 50% by weight, there is a problem in that the emulsion stability of the coagulant is reduced, which is not suitable for mass production of bean curd.

Specifically, the coagulant for producing a bean curd of the present disclosure may include 1% by weight to 10% by weight, specifically, 2.5% by weight to 7.5% by weight, and more specifically, 4% by weight to 6% by weight of perilla oil, but is not limited thereto.

When the perilla oil is included in an amount of less than 1% by weight, the unique beany flavor of beans may not be removed and the effect of increasing the savory taste of bean curd is not sufficient. When the perilla oil is included in an amount of more than 10% by weight, there is a problem in that the distinct aroma and greasy taste of perilla oil are strengthened, which reduces the preference for bean curd, and the emulsion stability of the coagulant is reduced, which is not suitable for mass production of bean curd.

Specifically, the coagulant for producing a bean curd of the present disclosure may include 15% by weight to 79% by weight, specifically, 25% by weight to 70% by weight, and more specifically, 50% by weight to 60% by weight of the fast-acting coagulant, but is not limited thereto.

When the fast-acting coagulant is included in an amount of less than 15% by weight, the coagulation reaction occurs too slowly, and thus industrial efficiency is very low. When the fast-acting coagulant is included in an amount of more than 79% by weight, there is a problem in that emulsification does not occur, which makes it impossible to prepare the emulsified coagulant.

The coagulant for producing a bean curd of the present disclosure may include the macadamia nut oil, the perilla oil, and the fast-acting coagulant in the above contents, thereby removing the beany flavor unique to soybeans, preventing the bitter taste, off-flavor and odor unique to the coagulant for producing a bean curd, and enhancing the original savory flavor of bean curd.

In one embodiment of the present disclosure, the coagulant may further include 0.001 % by weight to 20% by weight of edible oil, but is not limited thereto.

As used herein, the term "edible oil" refers to oil which is manufactured and processed to be edible from crude oil as a raw material, which is obtained from oil-containing plants (including crushed form) or animals. Specific examples of the edible oil may include plant oils such as perilla oil, macadamia nut oil, rice bran oil (brown rice oil, bran oil etc.), corn oil, soybean oil, rapeseed (canola, etc.) oil, sunflower oil, sesame oil, palm oil, palm kernel oil, olive oil, grape seed oil, hazelnut oil, cottonseed oil, peanut oil, almond oil, avocado oil, flaxseed oil, pumpkin seed oil, walnut oil, perilla oil, cashew nut oil, borage oil, etc., fish oil, animal fat, flavored oils/seasoning oils such as rayu, etc., but are not limited thereto.

With respect to the object of the present disclosure, the edible oil is an oil that is optionally mixed to increase the price competitiveness of new coagulants, and known edible oils commonly used may be used. Specifically, rice bran oil (brown rice oil, bran oil etc.) may be used, but is not limited to thereto.

The coagulant for producing a bean curd of the present disclosure may include 0% by weight to 20% by weight, more specifically, 0% by weight to 10% by weight of edible oil, but is not limited thereto. Specifically, the coagulant for producing a bean curd of the present disclosure may include no edible oil, or may further include 0.001% by weight to 20% by weight, more specifically, 0.001% by weight to 10% by weight of edible oil, but is not limited thereto.

The edible oil may be optionally included to increase price competitiveness, but when the edible oil is included in an amount of more than 20% by weight, specifically, more than 10% by weight, it affects the taste of the bean curd, causing a problem in that the acceptance and preference of bean curd is reduced.

In one embodiment of the present disclosure, the fast-acting coagulant may be selected from the group consisting of magnesium chloride, bittern containing magnesium chloride, seawater, concentrated seawater, prepared seawater magnesium chloride, calcium chloride, and lactic acid, but is not limited thereto.

Specifically, the fast-acting coagulant of the present disclosure may be magnesium chloride, but is not limited thereto.

Further, the coagulant for producing a bean curd of the present disclosure may have a viscosity of 12,000 cP to 26,000 cP. For example, as measured with a rotational viscometer at room temperature (15°C to 25°C), the viscosity may be 12,000 cP to 26,000 cP. The measurement may be performed after storage at 0°C to 20°C, for example, 5°C to 20°C. By having the above range of viscosity, the coagulant for producing a bean curd of the present disclosure has excellent emulsion stability, thereby being used up to 7 days after production.

Another aspect of the present disclosure provides a method of producing the coagulant for producing a bean curd of the present disclosure, the method including the step of mixing 20% by weight to 50% by weight of the macadamia nut oil, 1% by weight to 10% by weight of the perilla oil, and 15% by weight to 79% by weight of the fast-acting coagulant.

The macadamia nut oil, perilla oil, fast-acting coagulant, bean curd, and coagulant are as described above.

Specifically, the mixing step may be performed at a temperature of 55°C to 85°C, specifically at 60°C to 80°C, more specifically at 65°C to 75°C, and more specifically at about 70°C, but is not limited thereto.

When the mixing step is performed in the above range of temperature, the emulsion stability of the coagulant may be excellent.

In one embodiment of the present disclosure, the production method may further include the step of adding and mixing with 0.001% by weight to 20% by weight of the edible oil, but is not limited thereto.

Still another aspect of the present disclosure provides a bean curd which is produced using the coagulant.

The bean curd and coagulant are as described above.

In one embodiment of the present disclosure, the bean curd produced using the coagulant may have an increased savory taste of bean curd, as compared to a bean curd produced using a coagulant without macadamia nut oil and perilla oil, but is not limited thereto.

Still another aspect of the present disclosure provides a method of producing a bean curd, the method including the steps of selecting soybeans, soaking and swelling the selected soybeans, producing soymilk by grinding and heating the swollen soybeans and then filtering the same, and coagulating the produced soymilk under stirring while adding the coagulant for producing a bean curd to the produced soymilk.

The bean curd and coagulant are as described above.

Since the overall quality such as yield, savory taste, and physical properties of the bean curd may vary depending on the coagulant used in the production of the bean curd, as well as the characteristics of soybeans as a raw material, the step of selecting soybeans is important in order to produce a high-quality bean curd with high efficiency.

Specifically, the selected soybeans in the present disclosure may have a 100-grain weight (a weight of 100 grains of soybeans) of 10 g to 35 g, specifically 15 g to 30 g, and more specifically 18 g to 26 g, but is not limited thereto. The "100-grain weight" refers to the weight (g) of 100 grains of soybeans.

Specifically, the selected soybeans of the present disclosure may have a particle size of 4.5 mm to 9.0 mm, specifically 5.0 mm to 8.5 mm, and more specifically 5.6 mm to 8.0 mm, but are not limited thereto.

The particle size may be measured by a known method, for example, by passing 100 grains of soybeans through a mesh net of 5.6 mm and 8.0 mm.

Specifically, the selected soybeans of the present disclosure may have a crude protein content of 15% to 45%, specifically 20% to 40%, and more specifically 21% to 37%, but are not limited thereto.

The crude protein content has a major impact on the yield and physical properties of bean curd, and a bean curd produced from soybeans with a high protein content has a high protein/fat ratio.

Specifically, the selected soybeans may have a 100-grain weight (a weight of 100 grains of soybeans) of 18 g to 26 g, a particle size of 5.6 mm to 8.0 mm, and a crude protein content of 21% to 37%, but are not limited thereto.

When soybeans having the 100-grain weight, the particle size, and/or the crude protein content in the above ranges are used to produce a bean curd, it is possible to produce a high-quality bean curd with a smooth bean curd surface due to less water loss and uniform curd properties, with high efficiency.

In one embodiment of the present disclosure, the coagulant in the coagulating step may be added in an amount of 0.1% by weight to 5.0% by weight, specifically 0.3% by weight to 3.0% by weight, and more specifically 0.5% by weight to 2.5% by weight, but is not limited thereto.

When the coagulant is included in an amount of less than 0.1% by weight, there is a problem in that the bean curd does not coagulate, and when the coagulant is included in an amount of more than 5.0% by weight, excessive coagulation occurs, causing severe water loss during bean curd molding, and a hard bean curd with low preference may be produced, and the production cost of bean curd becomes expensive, which may reduce yieldability.

In one embodiment of the present disclosure, the soaking time may be 12 hours to 22 hours, specifically 18 hours to 20 hours, but is not limited thereto.

When the soaking time is outside the above range of time, there are problems in that an insufficient soaking time results in poor grinding, leading to a low level of protein elution and poor bean curd molding, and an excessively long soaking time makes soybeans to germinate, which is not suitable for bean curd production.

In one embodiment of the present disclosure, the heating temperature may be 95°C to 105°C, specifically about 100°C, but is not limited thereto.

When the heating temperature is within the above range of temperature, a bean curd with desirable properties may be produced. When the heating temperature is outside the above range, there are problems in that a too low temperature results in insufficient heat denaturation of proteins, which makes it difficult to produce a bean curd with desirable properties, and a too high temperature results in protein insolubilization, which makes it difficult to produce a bean curd with desirable properties.

In the present disclosure, other additives such as salt, sauce, spices, plants such as herbs, etc. may be added to give additional taste to the bean curd.

**[Advantageous Effects]**

When a coagulant according to the present disclosure is used, a high-quality bean curd with an enhanced savory taste may be produced. Accordingly, it is economical because it does not require separate equipment, and the process is simple and less time-consuming, thereby being usefully applied to mass production of high-quality bean curds.

**[Brief Description of the Drawing]**

FIG. 1 is a graph showing the emulsion stability of a coagulant for producing a bean curd according to storage temperature; and

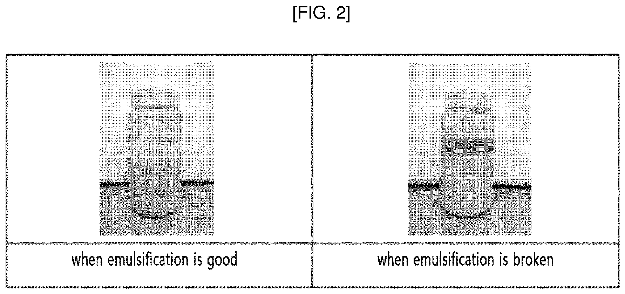

FIG. 2 is an image showing the emulsification state of the coagulant for producing a bean curd.

**[Mode for Carrying Out the Invention]**

Hereinafter, the present disclosure will be described in more detail by way of exemplary embodiments. However, the following exemplary embodiments are only preferred embodiments for illustrating the present disclosure, and thus are not intended to limit the scope of the present disclosure thereto. Meanwhile, technical matters not described in the present specification may be sufficiently understood and easily implemented by those skilled in the technical field of the present disclosure or similar technical fields.

**Example 1. Preparation of coagulant for producing bean curd**

Coagulants for producing a bean curd of Example 1-1 to Example 1-8 and Comparative Example 1-1 were prepared according to the mixing ratios in Table 1 below.

**[Table 1]**

|  | Example 1-1 | Example 1-2 | Example 1-3 | Example 1-4 | Example 1-5 | Example 1-6 | Example 1-7 | Example 1-8 | Comparative Example 1-1 |
|---|---|---|---|---|---|---|---|---|---|
| **Macadamia nut oil (g)** | 42 | 40 | 5 | 10 | 21.25 | 31.25 | 20 | 30 | 0 |
| **Perilla oil (g)** | 5 | 5 | 5 | 5 | 2.5 | 2.5 | 5 | 5 | 0 |
| **Rice bran oil (g)** | 0 | 0 | 35 | 30 | 21.25 | 11.25 | 20 | 10 | 50 |
| **Prepared seawater magnesium chloride (g)** | 53 | 55 | 55 | 55 | 55 | 55 | 55 | 55 | 50 |
| **Total (g)** | 100 | 100 | 100 | 100 | 100 | 100 | 100 | 100 | 100 |

[Example 1-1]

53 g of a prepared seawater magnesium chloride solution as a fast-acting coagulant, 42 g of macadamia nut oil, and 5 g of perilla oil were placed in a mixing container, and stirred and mixed while maintaining the temperature of the mixing container at 70°C to prepare a coagulant for producing a bean curd.

[Example 1-2]

55 g of a prepared seawater magnesium chloride solution as a fast-acting coagulant, 40 g of macadamia nut oil, and 5 g of perilla oil were placed in a mixing container, and stirred and mixed while maintaining the temperature of the mixing container at 70°C to prepare a coagulant for producing a bean curd.

[Example 1-3]

55 g of a prepared seawater magnesium chloride solution as a fast-acting coagulant, 5 g of macadamia nut oil, 5 g of perilla oil, and 35 g of rice bran oil were placed in a mixing container, and stirred and mixed while maintaining the temperature of the mixing container at 70°C to prepare a coagulant for producing a bean curd.

[Example 1-4]

55 g of a prepared seawater magnesium chloride solution as a fast-acting coagulant, 10 g of macadamia nut oil, 5 g of perilla oil, and 30 g of rice bran oil were placed in a mixing container, and stirred and mixed while maintaining the temperature of the mixing container at 70°C to prepare a coagulant for producing a bean curd.

[Example 1-5]

55 g of a prepared seawater magnesium chloride solution as a fast-acting coagulant, 21.25 g of macadamia nut oil, 2.5 g of perilla oil, and 21.25 g of rice bran oil were placed in a mixing container, and stirred and mixed while maintaining the temperature of the mixing container at 70°C to prepare a coagulant for producing a bean curd.

[Example 1-6]

55 g of a prepared seawater magnesium chloride solution as a fast-acting coagulant, 31.25 g of macadamia nut oil, 2.5 g of perilla oil, and 11.25 g of rice bran oil were placed in a mixing container, and stirred and mixed while maintaining the temperature of the mixing container at 70°C to prepare a coagulant for producing a bean curd.

[Example 1-7]

55 g of a prepared seawater magnesium chloride solution as a fast-acting coagulant, 20 g of macadamia nut oil, 5 g of perilla oil, and 20 g of rice bran oil were placed in a mixing container, and stirred and mixed while maintaining the temperature of the mixing container at 70°C to prepare a coagulant for producing a bean curd.

[Example 1-8]

55 g of a prepared seawater magnesium chloride solution as a fast-acting coagulant, 30 g of macadamia nut oil, 5 g of perilla oil, and 10 g of rice bran oil were placed in a mixing container, and stirred and mixed while maintaining the temperature of the mixing container at 70°C to prepare a coagulant for producing a bean curd.

[Comparative Example 1-1]

50 g of a prepared seawater magnesium chloride solution as a fast-acting coagulant, and 50 g of rice bran oil were placed in a mixing container, and stirred and mixed while maintaining the temperature of the mixing container at 70°C to prepare a coagulant for producing a bean curd.

**Example 2. Examination of emulsion stability of coagulant for producing bean curd**

It was intended to examine emulsion stability of the coagulants for producing a bean curd, which were prepared in Example 1-2. In detail, each coagulant for producing a bean curd was left in a refrigerator (below 10°C) and at room temperature (below 20°C) for 14 days or more, and the emulsion stability was examined.

To examine the emulsion stability, a 1 L sample was sampled and measured at room temperature (15°C to 25°C) under conditions of 63 spindle and 2.0 rpm using a DV-E viscometer (rotational viscometer, Brookfield).

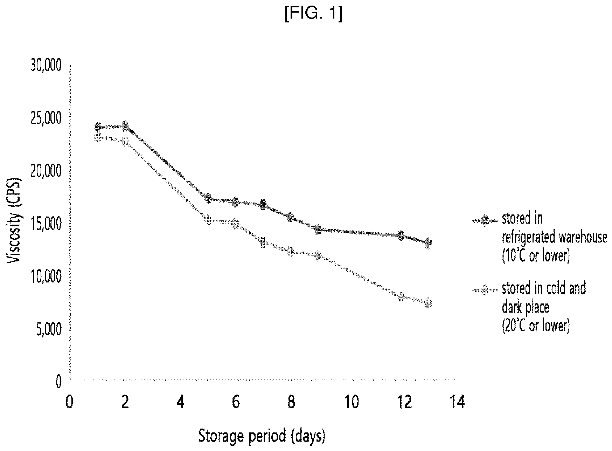

As a result, as shown in FIG. 1, it was confirmed that excellent emulsion stability was maintained for about 7 days when the target viscosity was from 26,000 cP to 12,000 cP. Therefore, it was confirmed that the coagulant for producing a bean curd of the present disclosure may be used up to 7 days after preparation.

**Example 3. Production of bean curd using coagulant for producing bean curd**

Bean curds were produced using the coagulants for producing a bean curd, which were prepared in Example 1.

**Example 3-1. Selection of soybeans**

To select soybeans suitable for bean curd production, 100-grain weight, particle size, and protein content were measured using the measurement methods below.

- 100-grain weight was determined by measuring the weight of 100 grains of soybeans.
- Particle size was determined by passing 100 grains of soybeans through a mesh net of 5.6 mm and 8.0 mm.

$$\text{Particle size (\%)} = \text{Total weight (g)/Off-grade weight (g)} * 100\%$$

- Crude protein content was measured three times for 300 g of sample using a component analyzer (Infratec 1241, FOSS Tecator, Hogenas, Sweden).

As a result, it was confirmed that when soybeans with a 100-grain weight of 18 g to 26 g, soybeans with 90% of the weight of 100 grains with a particle size of 5.6 mm or more and 8.0 mm or less, and soybeans with a crude protein content of 21% to 37% are used, it is possible to produce a soft bean curd due to the smooth bean curd surface and minimal water loss, and to produce a uniformly coagulated bean curd.

**Example 3-2. Production of bean curd using coagulant for producing bean curd**

Bean curds were produced using the soybeans selected in Example 3-1 and the coagulants for producing a bean curd, which were prepared in Example 1.

In detail, the soybeans selected in Example 3-1 were washed and then soaked in purified water at room temperature and allowed to swell for 12 hours or longer. The soaked soybeans were placed in a grinder and ground finely while adding water gradually, and then heated to 100°C to remove the beany flavor of the soybeans and to elute proteins. After heating, the soymilk was filtered through a cotton cloth and separated into soybean liquid and soy dregs. The soybean liquid at 70°C to 75°C was stirred with a homogenizing mixer (Primix corporation, Japan), and the coagulants for producing a bean curd of Examples 1-1 to 1-8 and Comparative Example 1-1, which were prepared in Example 1, were added respectively. 30 to 40 minutes after adding each coagulant, the coagulated soft bean curd was poured into a mold, pressed, and molded to produce a bean curd.

**Example 4. Sensory evaluation of bean curd**

Sensory evaluation was performed on the bean curds produced in Example 3.

In detail, 30 trained professional panelists were asked to eat the bean curds, and then to evaluate the savory taste intensity and preference. After each sample evaluation, the mouth was washed with water, and after one minute had passed, the next sample was evaluated. A score was given starting from 1 point, with the higher the preference or intensity, the closer to 9 points.

[Table 2]

| | Intensity of savory taste | Preference of savory taste |
|---|---|---|
| **Bean curd produced using coagulant of Example 1-1** | 9 | 9 |
| **Bean curd produced using coagulant of Example 1-2** | 9 | 9 |
| **Bean curd produced using coagulant of Example 1-3** | 4 | 4 |
| **Bean curd produced using coagulant of Example 1-4** | 5 | 5 |
| **Bean curd produced using coagulant of Example 1-5** | 6 | 5 |
| **Bean curd produced using coagulant of Example 1-6** | 7 | 6 |
| **Bean curd produced using coagulant of Example 1-7** | 7 | 7 |
| **Bean curd produced using coagulant of Example 1-8** | 8 | 8 |
| **Bean curd produced using coagulant of Comparative Example 1-1** | 2 | 2 |

As a result, as shown in Table 2, it was confirmed that as the content of rice bran oil was lower and the contents of perilla oil and macadamia nut oil were higher, the savory taste intensity and preference of bean curd were higher. Therefore, it was confirmed that the coagulant composition of the above mixing ratio had relatively excellent sensory preference in enhancing the savory taste of bean curds.

In addition, a comparative evaluation of the sensory quality was performed on the bean curd produced with the coagulant of Example 1-2, which was produced in Example 3, and a commercially available bean curd (coagulant: prepared seawater magnesium chloride, safflower oil, macadamia oil).

In detail, 30 trained professional panelists were asked to eat the bean curds, and then to evaluate the savory taste intensity and preference. After each sample evaluation, the mouth was washed with water, and after one minute had passed, the next sample was evaluated. A score was given starting from 1 point, with the higher the preference or intensity, the closer to 5 points.

[Table 3]

| | Bean curd produced with coagulant of Example 1-2 | | Commercially available product | |
|---|---|---|---|---|
| | Mean | Top 2% | Mean | Top 2% |
| Overall taste preference | 3.89 | 71.43 | 3.54 | 53.57 |
| Savory taste intensity | 3.68 | 75.00 | 3.86 | 64.29 |
| Savory taste preference | 3.71 | 67.86 | 3.71 | 53.57 |
| Physical property preference | 3.82 | 71.43 | 3.50 | 60.71 |
| Product preference | 57% | | 43% | |

As a result, as shown in Table 3, it was found that the bean curd produced with the coagulant of Example 1-2, which was prepared in Example 3, showed the high overall taste preference, physical property preference, and product preference, and its savory taste intensity was lower than that of commercially available bean curd, but its preference was slightly better. Therefore, it was confirmed that the coagulant composition of the above mixing ratio had relatively excellent sensory preference in enhancing the savory taste of bean curds.

Based on the above description, it will be understood by those skilled in the art that the present disclosure may be implemented in a different specific form without changing the technical spirit or essential characteristics thereof. In this regard, it should be understood that the above embodiment is not limitative, but illustrative in all aspects. The scope of the disclosure is defined by the appended claims rather than by the description preceding them, and therefore all changes and modifications that fall within metes and bounds of the claims, or equivalents of such metes and bounds are therefore intended to be embraced by the claims.

## Claims

1.   A coagulant for producing a bean curd, the coagulant comprising 20% by weight to 50% by weight of macadamia nut oil, 1% by weight to 10% by weight of perilla oil, and 15% by weight to 79% by weight of a fast-acting coagulant.

2.   The coagulant of claim 1, wherein the coagulant for producing a bean curd further comprises 0.001 % by weight to 20% by weight of an edible oil.

3.   The coagulant of claim 1, wherein the fast-acting coagulant is selected from the group consisting of magnesium chloride, bittern containing magnesium chloride, seawater, concentrated seawater, prepared seawater magnesium chloride, calcium chloride, and lactic acid.

4.   The coagulant of claim 1, wherein the coagulant for producing a bean curd, has a viscosity of 12,000cP to 26,000cP.

5.   A bean curd produced using the coagulant of any one of claims 1 to 4.

6.   The bean curd of claim 5, wherein the bean curd produced using the coagulant has an enhanced savory taste of bean curd, as compared to a bean curd produced using a coagulant without macadamia nut oil and perilla oil.

7.   A method of producing a bean curd, the method comprising the steps of:

    selecting soybeans;
    soaking and swelling the selected soybeans;
    producing soymilk by grinding and heating the swollen soybeans and then filtering the same; and
    coagulating the produced soymilk under stirring while adding the coagulant of any one of claims 1 to 4 thereto.

8.   The method of claim 7, wherein the selected soybeans have a 100-grain weight (a weight of 100 grains of soybeans) of 10 g to 35 g.

9.   The method of claim 7, wherein the selected soybeans have a particle size of 4.5 mm to 9.0 mm.

10. The method of claim 7, wherein the selected soybeans have a crude protein content of 15% to 45%.

11. The method of claim 7, wherein the coagulant of the coagulating step is added in an amount of 0.1% by weight to 5.0% by weight.

12. The method of claim 7, wherein the soaking time is 12 hours to 22 hours.

13. The method of claim 7, wherein the heating temperature is 95°C to 105°C.

[FIG. 1]

[FIG. 2]

| when emulsification is good | when emulsification is broken |

## INTERNATIONAL SEARCH REPORT

| International application No. |
|---|
| **PCT/KR2022/020846** |

| A. | CLASSIFICATION OF SUBJECT MATTER |
|---|---|

**A23L 29/00**(2016.01)i; **A23L 11/45**(2021.01)i; **A23L 11/30**(2016.01)i

According to International Patent Classification (IPC) or to both national classification and IPC

| B. | FIELDS SEARCHED |
|---|---|

Minimum documentation searched (classification system followed by classification symbols)

A23L 29/00(2016.01); A23L 11/00(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 두부(tofu), 응고제(coagulant), 염화마그네슘(magnesium chloride), 마카다미아 (macadamia), 들기름(perilla seed oil)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2013-0091713 A (TAKAI TOFU & SOYMILK EQUIPMENT COMPANY LIMITED) 19 August 2013 (2013-08-19)<br>See claim 1; and paragraphs [0017], [0053], [0077], [0092] and [0093]. | 1-6 |
| Y | | 7-13 |
| Y | KR 10-2006-0114988 A (CJ CORPORATION) 08 November 2006 (2006-11-08)<br>See claims 1, 3 and 5; and examples 1 and 2. | 7-13 |
| A | KR 10-2011-0076822 A (TAKAI TOFU & SOYMILK EQUIPMENT COMPANY LIMITED) 06 July 2011 (2011-07-06)<br>See claim 1; and paragraph [0042]. | 1-13 |
| A | US 2002-0176925 A1 (NAKANO, T.) 28 November 2002 (2002-11-28)<br>See abstract; and claim 1. | 1-13 |

[✓] Further documents are listed in the continuation of Box C.     [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 April 2023** | **07 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/020846**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2002-0092285 A (DO, Dae Hong) 11 December 2002 (2002-12-11)<br>See abstract; and claim 1. | 1-13 |

# EP 4 445 749 A1

| INTERNATIONAL SEARCH REPORT | | | | | | | International application No. |
|---|---|---|---|---|---|---|---|
| Information on patent family members | | | | | | | **PCT/KR2022/020846** |

| Patent document cited in search report | | | Publication date (day/month/year) | Patent family member(s) | | | Publication date (day/month/year) |
|---|---|---|---|---|---|---|---|
| KR | 10-2013-0091713 | A | 19 August 2013 | JP | 2011-045366 | A | 10 March 2011 |
| | | | | JP | 2012-254097 | A | 27 December 2012 |
| | | | | JP | 5102866 | B2 | 19 December 2012 |
| | | | | JP | 5753145 | B2 | 22 July 2015 |
| | | | | KR | 10-1307398 | B1 | 11 September 2013 |
| | | | | KR | 10-1320977 | B1 | 23 October 2013 |
| | | | | KR | 10-2011-0011581 | A | 08 February 2011 |
| | | | | US | 2011-0020524 | A1 | 27 January 2011 |
| KR | 10-2006-0114988 | A | 08 November 2006 | KR | 10-0774912 | B1 | 09 November 2007 |
| KR | 10-2011-0076822 | A | 06 July 2011 | JP | 2011-152131 | A | 11 August 2011 |
| | | | | JP | 5867997 | B2 | 24 February 2016 |
| | | | | KR | 10-1304384 | B1 | 11 September 2013 |
| | | | | US | 2011-0154992 | A1 | 30 June 2011 |
| | | | | US | 8739685 | B2 | 03 June 2014 |
| US | 2002-0176925 | A1 | 28 November 2002 | DE | 60211058 | T2 | 07 December 2006 |
| | | | | EP | 1240830 | A2 | 18 September 2002 |
| | | | | EP | 1240830 | A3 | 17 September 2003 |
| | | | | EP | 1240830 | B1 | 03 May 2006 |
| | | | | JP | 2002-262806 | A | 17 September 2002 |
| | | | | JP | 3781177 | B2 | 31 May 2006 |
| | | | | KR | 10-0456925 | B1 | 10 November 2004 |
| | | | | KR | 10-2002-0072788 | A | 18 September 2002 |
| | | | | US | 6838111 | B2 | 04 January 2005 |
| KR | 10-2002-0092285 | A | 11 December 2002 | KR | 10-0395431 | B1 | 21 August 2003 |

Form PCT/ISA/210 (patent family annex) (July 2022)

**EP 4 445 749 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 0229010